(19) Europäisches Patentamt

European Patent Office

Office européen des brevets

(11) **EP 1 669 983 A1**

(12) **EUROPEAN PATENT APPLICATION**

(43) Date of publication:
**14.06.2006 Bulletin 2006/24**

(51) Int Cl.:
***G10L 21/02*** *(2006.01)*

(21) Application number: **05026904.2**

(22) Date of filing: **08.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.12.2004 US 6935**

(71) Applicant: **Harman Becker Automotive Systems-Wavemakers, Inc.**
**Vancouver, British Columbia, V6B 2K4 (CA)**

(72) Inventors:
 • **Hetherington, Phillip A.**
  **Port Moody, British Columbia**
  **V53 5H7 (CA)**
 • **Groves, Adrian R.**
  **Surrey, British Columbia**
  **V4A 9P2 (CA)**

(74) Representative: **Grünecker, Kinkeldey,**
**Stockmair & Schwanhäusser**
**Anwaltssozietät**
**Maximilianstrasse 58**
**80538 München (DE)**

(54) **System for suppressing rain noise**

(57) A voice enhancement logic improves the perceptual quality of a processed signal. The voice enhancement system includes a noise detector and a noise attenuator. The noise detector detects and models the noise associated with rain. The noise attenuator dampens or reduces the rain noise from a signal to improve the intelligibility of an unvoiced, a fully voiced, or a mixed voice segment.

FIGURE 1

EP 1 669 983 A1

**Description**

**PRIORITY CLAIM**

This application is a continuation in-part of U.S. Application No. 10/688,802 "System for Suppressing Wind Noise," filed October 16, 2003, which is a continuation in-part of U.S. Application No. 10/410,736, "Method and Apparatus for Suppressing Wind Noise," filed April 10, 2003, which claims priority to U.S. Application No. 60/449, 511 "Method for Suppressing Wind Noise" filed on February 21, 2003. The disclosures of the above applications are incorporated herein by reference.

**BACKGROUND OF THE INVENTION**

**1. Technical Field.**

This invention relates to acoustics, and more particularly, to a system that enhances the perceptual quality of sound by reducing interfering noise.

**2. Related Art.**

Many hands-free communication devices acquire, assimilate, and transfer a voice signal. Voice signals pass from one system to another through a communication medium. In some systems, including those used in vehicles, the clarity of a voice signal does not depend on the quality of the communication system or the quality of the communication medium. When noise occurs near a source or a receiver, distortion may interfere with the voice signal, destroy information, and in some instances, masks the voice signal so that it cannot be recognized.

Noise may come from many sources. In a vehicle, noise may be created by the engine, the road, the tires, or by the surrounding environment. When rain falls onto a vehicle it produces noise that may be heard across a broad frequency spectrum. Some aspects of this noise are predictable, while others are random.

Some systems attempt to counteract the effects of rain noise by insulating vehicles with a variety of sound-suppressing and dampening materials. While these materials are effective in reducing some noises, the materials also absorb desired signals and do not block the rain noise that may mask a portion of the audio spectrum. Another problem with some speech enhancement systems is that of detecting rain noise. Yet another problem with some speech enhancement systems is that they do not easily adapt to other communication systems.

Therefore there is a need for a system that counteracts the noise associated with water striking a surface across a varying frequency range.

**SUMMARY**

This invention provides a voice enhancement logic that improves the perceptual quality of a processed voice. The system learns, encodes, and then dampens the noise associated with water striking a surface that includes the surface of a vehicle. The system includes a noise detector and a noise attenuator. The noise detector detects noise associated with falling water, such as the noise that may be heard during a rainstorm. The noise attenuator dampens or reduces some of the detected rain noise.

Alternative voice enhancement logic includes time frequency transform logic, a background noise estimator, a rain noise detector, and a rain noise attenuator. The time frequency transform logic converts a time varying input signal into a frequency domain output signal. The background noise estimator measures the continuous noise that may accompany the input signal. The rain noise detector automatically identifies and models some of the noise associated with rain, which is then dampened or reduced by the rain noise attenuator.

Other systems, methods, features and advantages of the invention will be, or will become, apparent to one with skill in the art upon examination of the following figures and detailed description. It is intended that all such additional systems, methods, features and advantages be included within this description, be within the scope of the invention, and be protected by the following claims.

**BRIEF DESCRIPTION OF THE DRAWINGS**

The invention can be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 is a partial block diagram of voice enhancement logic.

Figure 2 is a time series plot of noise associated with rain and other sources.

Figure 3 is a is a time-frequency plot of noise associated with rain and other sources.

Figure 4 is a waterfall plot of simulated noises of rain and other sources.

Figure 5 is a block diagram of the voice enhancement logic of Figure 1.

Figure 6 is a pre-processing system coupled to the voice enhancement logic of Figure 1.

Figure 7 is an alternative pre-processing system coupled to the voice enhancement logic of Figure 1.

Figure 8 is a block diagram of an alternative voice enhancement system.

Figure 9 is a graph of a rain noise masking a portion of a voice signal.

Figure 10 is a graph of a processed and reconstructed voice signal.

Figure 11 is a flow diagram of a voice enhancement.

Figure 12 is a block diagram of voice enhancement logic within a vehicle.

Figure 13 is a block diagram of voice enhancement logic interfaced to an audio system and/or a navigation system and/or a communication system.

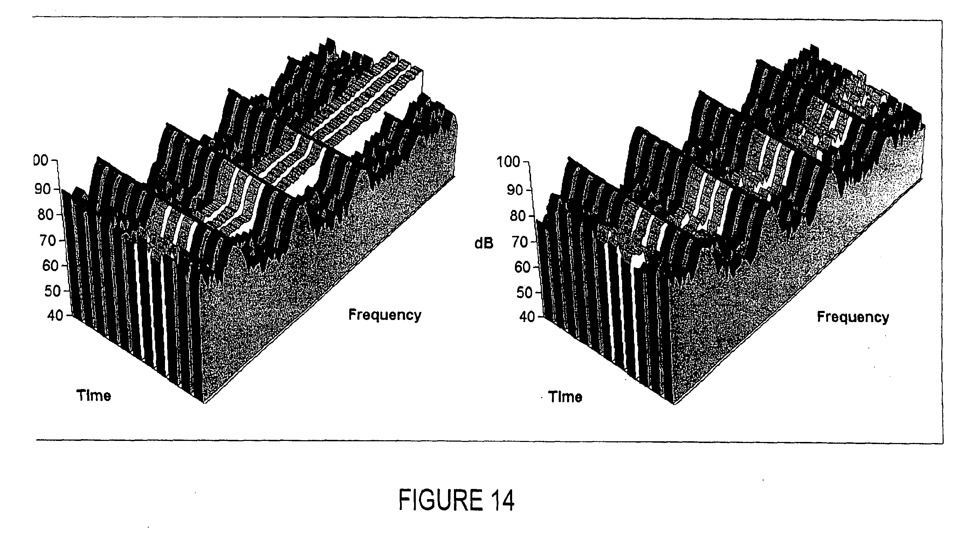

Figure 14 are waterfall plots of simulated voice combined with noises of rain and other sources.

Figure 15 is a simulated time-frequency plot showing a two-dimensional raindrop noise model.

Figure 16 is a combined frequency-magnitude and frequency-phase plot of a simulated frame containing raindrop noise.

## DETAILED DESCRIPTION OF THE PREFERRED EMBODIMENTS

A voice enhancement logic improves the perceptual quality of a processed voice. The logic may automatically learn and encode the shape and form of the noise associated with rain in a real or a delayed time. By tracking selected attributes, the logic may substantially eliminate or dampen rain noise using a memory that temporarily stores the selected attributes of the noise. Alternatively, the logic may also dampen a continuous noise and/or the "musical noise," squeaks, squawks, chirps, clicks, drips, pops, tones, or other sound artifacts that may be generated by some voice enhancement systems.

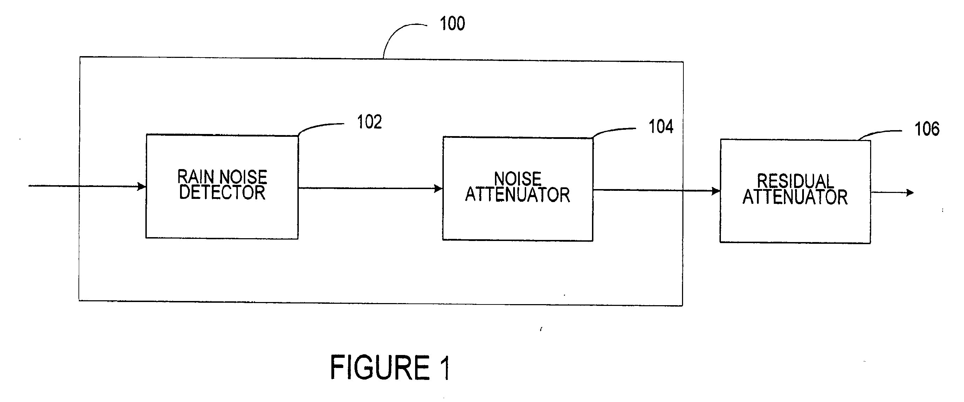

Figure 1 is a partial block diagram of the voice enhancement logic 100. The voice enhancement logic 100 may encompass hardware or software that is capable of running on one or more processors in conjunction with one or more operating systems. The highly portable logic includes a rain noise detector 102 and a noise attenuator 104.

In Figure 1 the rain noise detector 102 may identify and model a noise associated with rain that falls onto or strikes a surface. While rain noise may occur across a broad frequency spectrum, the rain noise detector 102 is configured to detect and model the rain noise that is perceived by the ear. The rain noise detector 102 receives incoming sound, that in the short term spectra, may be classified into three broad categories: (1) unvoiced, which exhibits noise-like characteristics that may include the noise associated with rain, e.g., it may have some spectral shape but no harmonic or formant structure; (2) fully voiced, which exhibits a regular harmonic structure, or peaks at pitch harmonics weighted by the spectral envelope that may describe the formant structure, and (3) mixed voice, which exhibits a mixture of the above two categories, some parts containing noise-like segments that may include rain noise, the rest exhibiting a regular harmonic structure and/or a formant structure.

The rain noise detector 102 may separate the noise-like segments from the remaining signal in a real or in a delayed time no matter how complex or how loud an incoming noise segment may be. The separated noise-like segments are analyzed to detect the occurrence of rain noise, and in some instances, the presence of a continuous underlying noise. When rain noise is detected, the spectrum is modeled, and the model is retained in a memory. While the rain noise detector 102 may store an entire model of a rain noise signal, it also may store selected attributes in a memory. Some selected attributes may model the noise created by rain striking a surface, the peripheral noise (e.g. in vehicle noise) that may be heard in a rainstorm, or a combination thereof.

To overcome the effects of rain noise, and in some instances, the underlying continuous noise that may include ambient noise, the noise attenuator 104 substantially removes or dampens the rain noise and/or the continuous noise from the unvoiced and mixed voice signals. The voice enhancement logic 100 encompasses any system that substantially removes, dampens, or reduces rain noise across a desired frequency spectrum. Examples of systems that may dampen or remove rain noise include systems that use a signal and a noise estimate such as (1) systems which use a neural network mapping of a noisy signal and an estimate of the noise to a noise-reduced signal, (2) systems that subtract the noise estimate from a noisy-signal, (3) systems that use the noisy signal and the noise estimate to select a noise-reduced signal from a code-book, (4) systems that in any other way use the noisy signal and the noise estimate to create a noise-reduced signal based on a reconstruction of the masked signal. These systems may attenuate rain noise, and in some instances, attenuate the continuous noise that may be part of the short-term spectra. The noise attenuator 104 may also interface or include an optional residual attenuator 106 that removes or dampens artifacts that may be introduced into the processed signal. The residual attenuator 106 may remove the "musical noise," squeaks, squawks, chirps, clicks, drips, pops, tones, or other sound artifacts.

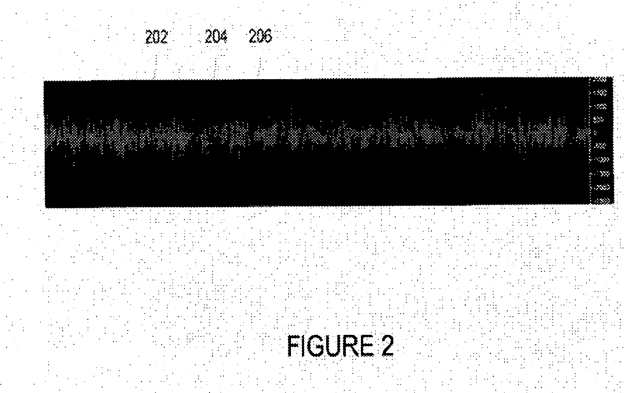

Figure 2 illustrates an exemplary frame of voice speech and a noisy signal created by water condensed from atmospheric vapor and falling in drops onto a surface. The rain pulses 202, 204, and 206 include the sound created by the rain striking a surface. The amplitudes of the rain pulses 202, 204, and 206 reflect the relative differences in power or intensity of rain striking a surface as detected by a receiver or a detector. In a vehicle, the rain pulses 202, 204, and 206 may represent the sound created when natural flowing water strikes a surface such as a window or the sound created when water conveyed under a pressure strikes a surface. The continuous noise shown in Figure 2 may include an ambient noise, a noise associated with an engine, a noise created by a powertrain, a road noise, tire noise, other vehicle noises, or any other sounds.

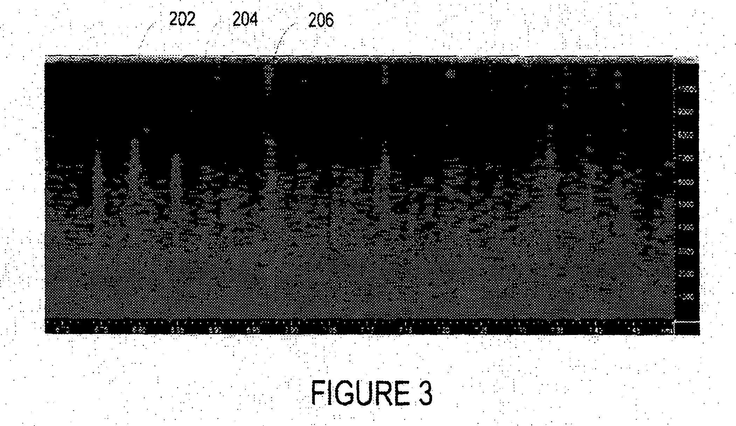

In the frequency spectral domain shown in Figure 3, the continuous noise and rain pulses 202 204 and 206 may range from a substantially linear pulse to a curvilinear pulse. The substantially vertical lines of the raindrop transients shown in Figure 3 may not be perfectly straight. Variances may be due to inherent distortion in the rain noise detector 102, the acoustics of the vehicle, and other sources. In some rain noise detectors 102 or the devices that may interface the rain noise detector 102, the circuits or hardware that converts sound waves into analog signals or convert the sound waves into digital data may distort the rain drop data. The shape of the rain drop transients may change as the signal is detected by or processed by such circuits. This distortion may result in loss of information. In some voice enhancement logic, the distortion may be learned and encoded allowing some of the noise attenuators 104 to substantially remove, dampen, or reduce the distortion.

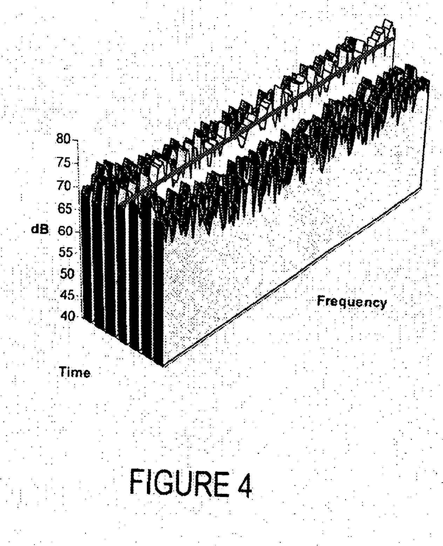

Rain drop detection may occur by monitoring segments of frequency forward and/or backward in time. Filter banks or Fast Fourier Transforms ("FFT") may transform sound into the log frequency domain. Through a comparison, the rain noise detector 102 identifies the frames that have substantially more energy than their adjacent frequency bands or frames. If a frequency band in a frame has higher energy than in an adjacent frame, the rain noise detector 102 looks for other frequency bands that also have more energy than in their neighboring frames. When the energy within these frequency bands can fit to a model such as straight line as shown in Figure 4 or what may resemble a straight line, the rain noise detector 102 identifies the band as potential rain events. In some rain noise detectors 102 rain events may occur when the dispersion or variation of the energy relative to the line (e.g., the standard deviation) is within a predetermined or programmable range. Bands showing energy over neighbor but which are appreciably higher than the model may not be considered to be part of the rain drop noise.

Once the relative magnitudes and durations of the rain drop transients are learned, their removal may be accomplished by many methods. In one method, the noise attenuator 104 replaces the rain drop transient with an estimated value based on the values of adjacent frames. The interpolation method may occur with one or more frames positioned backward and/or forward in time and may impose predetermined restrictions and/or prior constraints. In an alternative method, the noise attenuator 104 adds the learned positions and frequencies to a known or measured constant noise estimate. The noise attenuator 104 then subtracts the noise estimate that includes the modeled rain noise from the noisy signal.

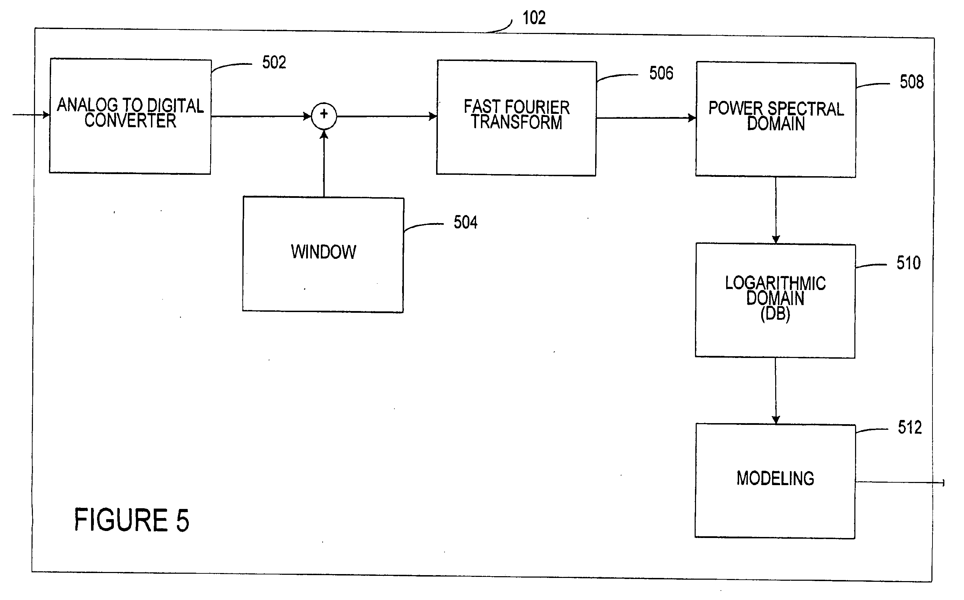

Figure 5 is a block diagram of an example rain noise detector 102 that may receive or detect an unvoiced, fully voiced, or a mixed voice input signal. A received or detected signal is digitized at a predetermined frequency. To assure a good quality voice, the voice signal is converted to a pulse-code-modulated (PCM) signal by an analog-to-digital converter 502 (ADC) having any common sample rate. A smooth window 504 is applied to a block of data to obtain the windowed signal. The complex spectrum for the windowed signal may be obtained by means of a Fast Fourier Transform (FFT) 406 or a filter bank that separates the digitized signals into frequency bins, with each bin identifying an amplitude and phase across a small frequency range. Each frequency bin may then be converted into the power-spectral domain 508 and logarithmic domain 510 to develop a rain noise estimate with or without a continuous noise estimate. As more windows of sound are processed, the rain noise detector 102 may derive average rain noise estimates. A time-smoothed or weighted average may be used to estimate the rain noise with or without a continuous noise estimate for each frequency bin.

To detect a rain event, a line may be fitted to a selected portion of the frequency spectrum. Through a regression, a best-fit line may measure the severity of the rain noise within a given block of data. A high correlation between the best-fit line and the selected frequency spectrum may identify a rain noise event. Whether or not a high correlation exists, may depend on variations in frequency and amplitude of the rain noise and the presence of voice or other noises.

To limit a masking of voice, the fitting of the line to a suspected rain noise signal may be constrained by rules. Exemplary rules may prevent a calculated parametric description such as an offset, a slope, a curvature or a coordinate point in a rain noise model from exceeding an average value. Another rule may adjust or modulate the rain noise correction to prevent the noise attenuator 104 from applying a calculated rain noise correction when a vowel or another harmonic structure is detected. A harmonic may be identified by its narrow width and its sharp peak, or in conjunction with a voice or a pitch detector. If a vowel or another harmonic structure is detected, the rain noise detector 102 may limit the rain noise correction to values less than or equal to predetermined or average values. An additional rule may allow the average rain noise model or its attributes to be updated only during unvoiced segments. If a voiced or a mixed voice segment is detected, the average rain noise model or its attributes are not updated under this rule. If no voice is detected, the rain noise model or each attribute may be updated through any means, such as through a weighted average or a leaky integrator. Many other rules may also be applied to the model. The rules may provide a substantially good linear fit to a suspected rain noise event without masking a voice segment.

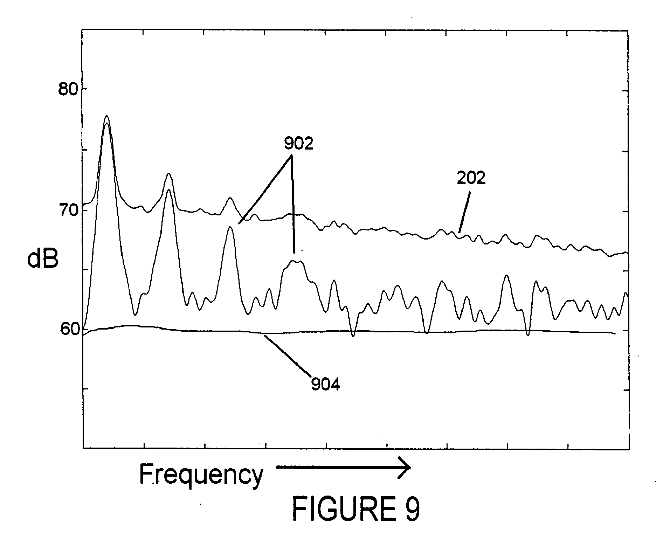

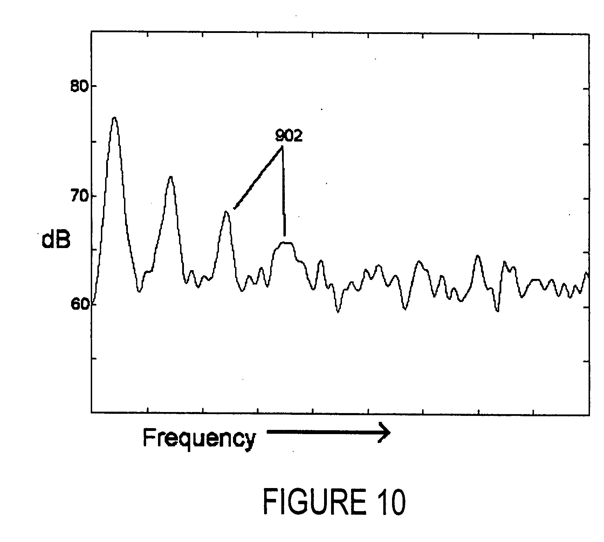

To overcome the effects of rain noise, a rain noise attenuator 104 may substantially remove or dampen the rain noise from the noisy spectrum by any method. One method may add the rain noise model to a recorded or modeled continuous noise 904. In the power spectrum, the modeled noise may then be subtracted from the unmodified spectrum. If an underlying peak 902 or valley is masked by rain noise as shown in Figure 9 or masked by a continuous noise, a conventional or modified interpolation method may be used to reconstruct the peak and/or valley as shown in Figure 10. A linear or step-wise interpolator may be used to reconstruct the missing part of the signal. An inverse FFT, filter bank, may then be used to convert the signal power to the time domain, which provides a reconstructed voice signal. Alternatively, the signal may be transformed into another frequency transform such as Mel frequency cepstral coefficients.

To minimize the "music noise," squeaks, squawks, chirps, clicks, drips, pops, tones, or other sound artifacts that may be generated in a selected frequency range by some rain noise attenuators, an optional residual attenuator 106 (shown in Figure 1) may also condition the voice signal before or after it is converted to the time domain. The residual attenuator 106 may track the power spectrum within a selected frequency range such as the mid to high frequency range (e.g., more than about 1000 Hz). When a large increase in signal power is detected an improvement may be obtained by limiting or dampening the transmitted power in that range to a predetermined or calculated threshold. A calculated threshold may be equal to, or based on, the average spectral power of that same frequency range at an earlier period in time.

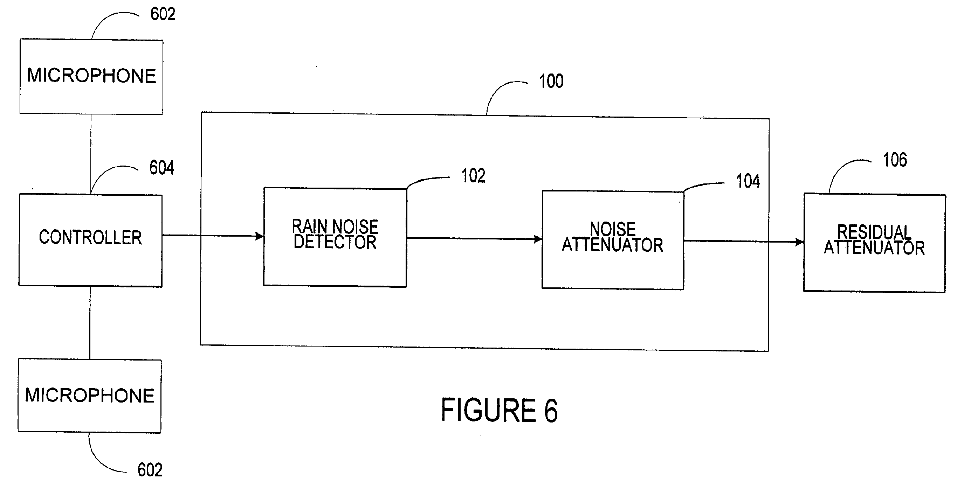

Further improvements to voice quality may be achieved by pre-conditioning the input signal before the rain noise detector 102 processes it. One pre-processing system may exploit the lag time that a signal may arrive at different detectors that are positioned apart as shown in Figure 6. If multiple detectors or microphones 602 are used that convert sound into an electric signal, the pre-processing system may include control logic 604 that automatically selects the microphone 602 and channel that senses the least amount of rain noise. When another microphone 602 is selected, the electric signal may be combined with the previously generated signal before being processed by the rain noise detector 102.

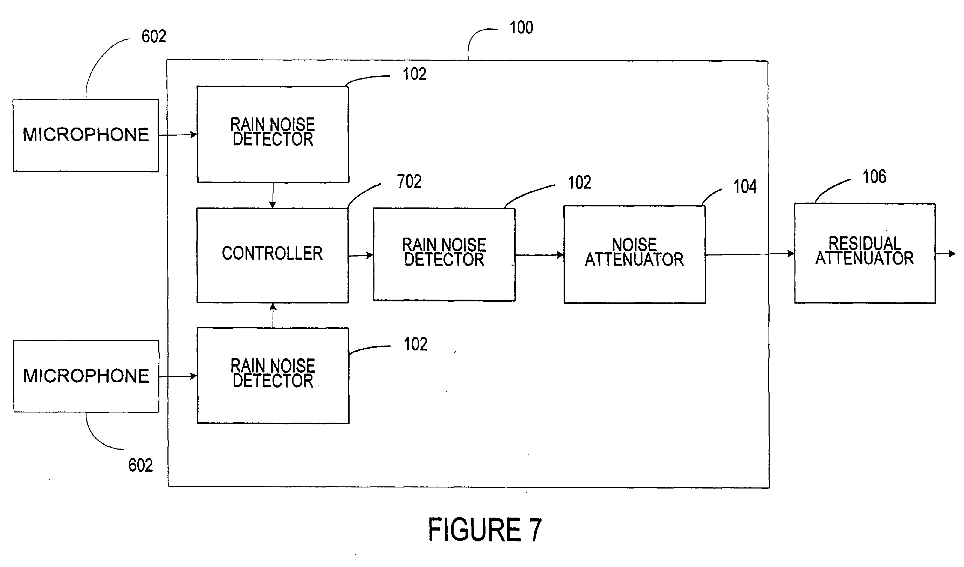

Alternatively, multiple rain noise detectors 102 may be used to analyze the input of each of the microphones 602 as shown in Figure 7. Spectral rain noise estimates may be made on each of the channels. A mixing of one or more channels may occur by switching between the outputs of the microphones 602. The signals may be evaluated and selected on a frequency-by-frequency basis. Alternatively, control logic 702 may combine the output signals of multiple rain noise detectors 102 at a specific frequency or frequency range through a weighting function.

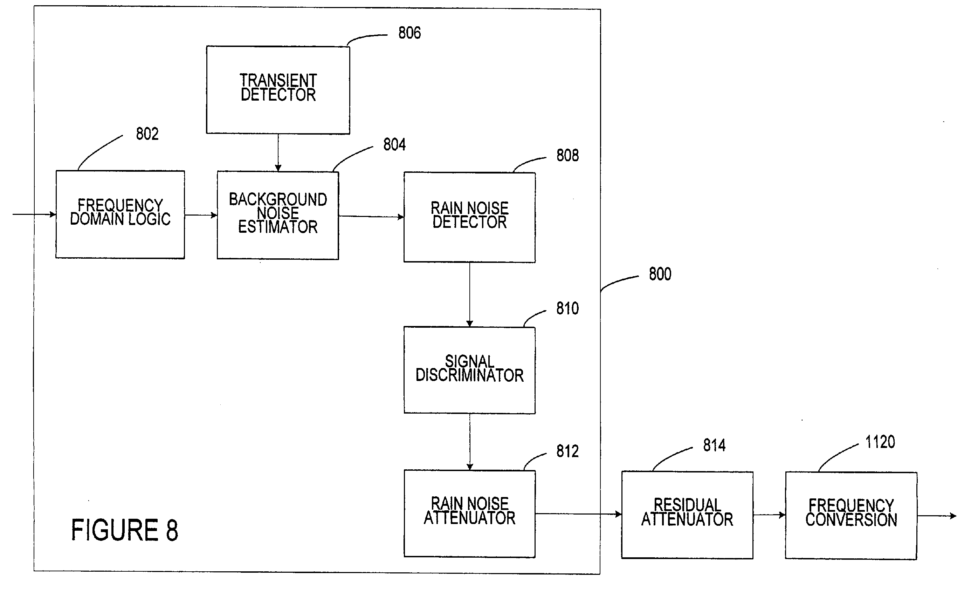

Figure 8 is alternative voice enhancement logic 800 that also improves the perceptual quality of a processed voice. The enhancement is accomplished by time-frequency transform logic 802 that digitizes and converts a time varying signal to the frequency domain. A background noise estimator 804 measures the continuous or ambient noise that occurs near a sound source or the receiver. The background noise estimator 804 may comprise a power detector that averages the acoustic power in each frequency bin. To prevent biased noise estimations at non-periodic transients, a transient detector 806 disables the noise estimation process during unexpected or unpredictable increases in power. In Figure 8, the transient detector 806 may disable the background noise,estimator 704 when an instantaneous background noise $B(f, i)$ exceeds an average background $noise\ B\ (f)_{Ave}$ by more than a selected decibel level '$c.$' This relationship may be expressed as:

$$B(f, i) > \quad B\ (f)_{Ave} + c \qquad\qquad\qquad \textbf{(Equation 1)}$$

To detect a rain event, a rain noise detector 708 may fit a line to a selected portion of the spectrum. Through a regression, a best-fit line may model the severity of the rain noise 202. To limit any masking of voice, the fitting of the line to a suspected range of rain noise may be constrained by the rules described above. A rain event may be identified when a high correlation between a fitted line and the noise associated with rain is detected. Whether or not a high correlation exists, may depend on a desired clarity of a processed voice and the variations in frequency and amplitude of the rain noise.

Alternatively, a rain event may be identified by the analysis of time varying spectral characteristics of the input signal that may be graphically displayed on a spectrogram. A spectrogram is a two dimensional pattern as shown in Figure 3 in which the vertical dimensions correspond to frequency and the horizontal dimensions correspond to time.

A signal discriminator 810 may mark the voice and noise of the spectrum in real or delayed time. Any method may be used to distinguish voice from noise. In Figure 7, voiced signals may be identified by (1) the narrow widths of their bands or peaks; (2) the resonant structure that may be harmonically related; (3) the resonances or broad peaks that correspond to formant frequencies; (4) characteristics that change relatively slowly with time; (5) their durations;

and when multiple detectors or microphones are used, (6) the correlation of the output signals of the detectors or microphones, and many other attributes and/or combinations.

To overcome the effects of rain noise, a rain noise attenuator 812 may dampen or substantially remove the rain noise from the noisy spectrum by any method. One method may add the periodic rain noise pulses to a recorded or modeled continuous noise. In the power spectrum, the modeled noise may then be removed from the unmodified spectrum by the means described above. If an underlying peak or valley 902 is masked by rain noise 202 as shown in Figure 9 or masked by a continuous noise, a conventional or modified interpolation method may be used to reconstruct the peak and/or valley as shown in Figure 10. A linear or step-wise interpolator may be used to reconstruct the missing part of the signal. A time series synthesizer may then be used to convert the signal power to the time domain, which provides a reconstructed voice signal.

To minimize the "musical noise," squeaks, squawks, chirps, clicks, drips, pops, tones, or other sound artifacts that may be generated in a selected frequency range by some rain noise attenuators, an optional residual attenuator 814 may also be used. The residual attenuator 814 may track the power spectrum within a frequency range. When a large increase in signal power is detected an improvement may be obtained by limiting the transmitted power in the frequency range to a predetermined or calculated threshold. A calculated threshold may be equal to or based on the average spectral power of that same frequency range at a period earlier or later in time.

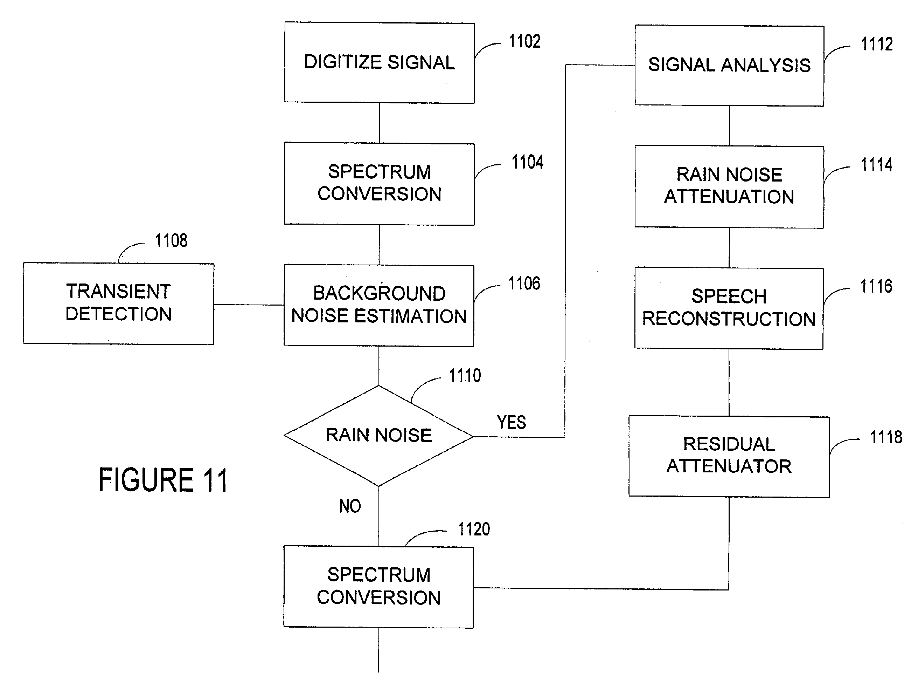

Figure 11 is a flow diagram of a voice enhancement that removes some rain noise and continuous noise to enhance the perceptual quality of a processed voice. At act 1102 a received or detected signal is digitized at a predetermined frequency. To assure a good quality voice, the voice signal may be converted to a PCM signal by an ADC. At act 1104 a complex spectrum for the windowed signal may be obtained by means of an FFT or filter bank that separates the digitized signals into frequency bins, with each bin identifying an amplitude and a phase across a small frequency range.

At act 1106, a continuous or ambient noise is measured. The background noise estimate may comprise an average of the acoustic power in each frequency bin. To prevent biased noise estimations at transients, the noise estimation process may be disabled during abnormal or unpredictable increases in power at act 1108. The transient detection act 1108 disables the background noise estimate when an instantaneous background noise exceeds an average background noise by more than a predetermined decibel level.

At act 1110, a rain event may be detected when a high correlation exits between a best-fit line and a selected portion of the frequency spectrum. Alternatively, a rain event may be identified by the analysis of time varying spectral characteristics of the input signal. When a line fitting detection method is used, the fitting of the line to the suspected rain signal may be constrained by some optional acts. Exemplary optional acts may prevent a calculated offset, slope, or coordinate point in a rain noise model from exceeding an average value. Another optional act may prevent the rain noise detection method from applying a calculated rain noise correction when a vowel or another harmonic structure is detected. If a vowel or another harmonic structure is detected, the rain noise detection method may limit the rain noise correction to values less than or equal to predetermined or average values. An additional optional act may allow the average rain noise model or attributes to be updated only during unvoiced segments. If a voiced or mixed voice segment is detected, the average rain noise model or attributes are not updated under this act. If no voice is detected, the rain noise model or each attribute may be updated through many means, such as through a weighted average or a leaky integrator. Many other optional acts may also be applied to the model.

At act 1112, a signal analysis may discriminate or mark the voice signal from the noise-like segments. Voiced signals may be identified by any means including, for example, (1) the narrow widths of their bands or peaks; (2) the resonant structure that may be harmonically related; (3) their harmonics that correspond to formant frequencies; (4) characteristics that change relatively slowly with time; (5) their durations; and when multiple detectors or microphones are used, (6) the correlation of the output signals of the detectors or microphones.

To overcome the effects of rain noise, a rain noise is substantially removed or dampened from the noisy spectrum by any act. One exemplary act 1114 adds the substantially periodic rain pulses to a recorded or modeled continuous noise. In the power spectrum, the modeled noise may then be substantially removed from the unmodified spectrum by the methods and systems described above. If an underlying peak or valley 902 is masked by a rain event 202 as shown in Figure 9 or masked by a continuous noise 902, a conventional or modified interpolation method may be used to reconstruct the peak and/or valley at act 1116. A time series synthesis may then be used to convert the signal power to the time domain at act 1120, which provides a reconstructed voice signal.

To minimize the "musical noise," squeaks, squawks, chirps, clicks, drips, pops, frequency tones, or other sound artifacts that may be generated in the selected frequency range by some rain noise removal processes, a residual attenuation method may also be performed before the signal is converted back to the time domain. An optional residual attenuation method 1118 may track the power spectrum within a frequency range. When a large increase in signal power is detected an improvement may be obtained by limiting the transmitted power in that frequency range to a predetermined or calculated threshold. A calculated threshold may be equal to or based on the average spectral power of that same frequency range at a period earlier or later in time.

The method shown in Figure 11 may be encoded in a signal bearing medium, a computer readable medium such as a memory, programmed within a device such as one or more integrated circuits, or processed by a controller or a computer. If the methods are performed by software, the software may reside in a memory resident to or interfaced to the rain noise detector 102, noise attenuator 104, a communication interface, or any other type of non-volatile or volatile memory interfaced or resident to the voice enhancement logic 100 or 800. The memory may include an ordered listing of executable instructions for implementing logical functions. A logical function may be implemented through digital circuitry, through source code, through analog circuitry, or through an analog source such through an analog electrical, audio, or video signal. The software may be embodied in any computer-readable or signal-bearing medium, for use by, or in connection with an instruction executable system, apparatus, or device. Such a system may include a computer-based system, a processor-containing system, or another system that may selectively fetch instructions from an instruction executable system, apparatus, or device that may also execute instructions.

A "computer-readable medium," "machine-readable medium," "propagated-signal" medium, and/or "signal-bearing medium" may comprise any means that contains, stores, communicates, propagates, or transports software for use by or in connection with an instruction executable system, apparatus, or device. The machine-readable medium may selectively be, but not limited to, an electronic, magnetic, optical, electromagnetic, infrared, or semiconductor system, apparatus, device, or propagation medium. A non-exhaustive list of examples of a machine-readable medium would include: an electrical connection "electronic" having one or more wires, a portable magnetic or optical disk, a volatile memory such as a Random Access Memory "RAM" (electronic), a Read-Only Memory "ROM" (electronic), an Erasable Programmable Read-Only Memory (EPROM or Flash memory) (electronic), or an optical fiber (optical). A machine-readable medium may also include a tangible medium upon which software is printed, as the software may be electronically stored as an image or in another format (e.g., through an optical scan), then compiled, and/or interpreted or otherwise processed. The processed medium may then be stored in a computer and/or machine memory.

From the foregoing descriptions it should be apparent that the above-described systems may also condition signals received from only one microphone or detector. It should also be apparent, that many combinations of systems may be used to identify and track rain events. Besides the fitting of a line to a suspected rain event, a system may (1) detect periodic peaks in the spectra having a SNR greater than a predetermined threshold; (2) identify the peaks having a width greater than a predetermined threshold; (3) identify peaks that lack a harmonic relationships; (4) compare peaks with previous voiced spectra; and (5) compare signals detected from different microphones before differentiating the rain noise segments, other noise like segments, and regular harmonic structures. One or more of the systems described above may also be used in alternative voice enhancement logic.

Other alternative voice enhancement systems include combinations of the structure and functions described above. These voice enhancement systems are formed from any combination of structure and function described above or illustrated within the attached figures. The logic may be implemented in software or hardware. The term "logic" is intended to broadly encompass a hardware device or circuit, software, or a combination. The hardware may include a processor or a controller having volatile and/or non-volatile memory and may also include interfaces between devices through wireless and/or hardwire mediums. The wireless interfaces may utilize Zigbee, Wi-Fi, WiMax, Mobile-Fi, Ultrawideband, Bluetooth, cellular and any other wireless technologies or combination.

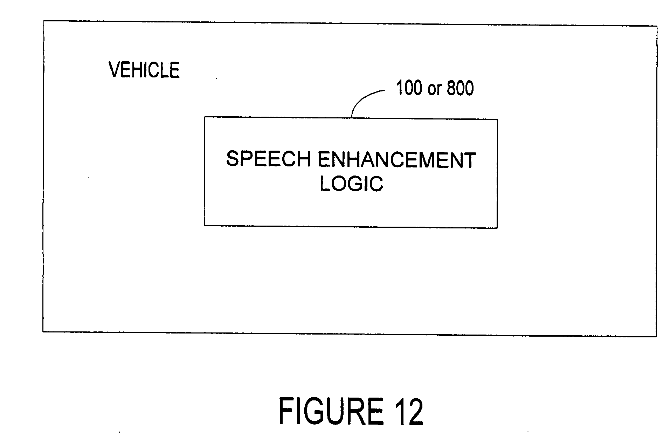

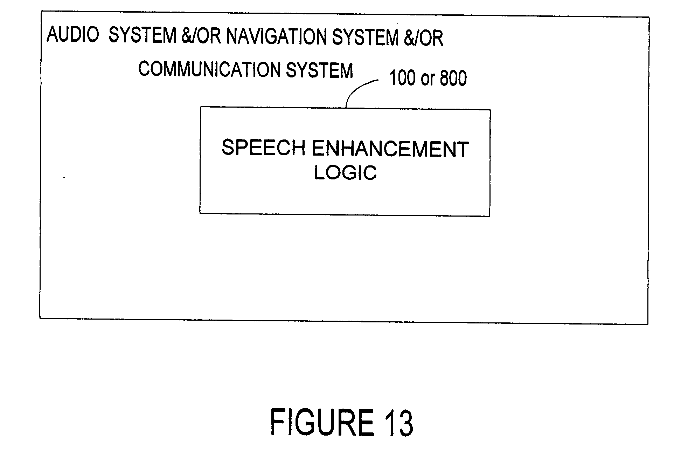

The voice enhancement logic is easily adaptable to any technology or devices. Some voice enhancement systems or components interface or couple devices or structures for transporting people or things such as the vehicle shown in Figure 12. Some voice enhancement systems or components interface or couple instruments that convert voice and other sounds into a form that may be transmitted to remote locations, such as landline and wireless devices, audio equipment, navigation equipment as shown in Figure 13, and other communication systems that may be susceptible to rain noise.

The voice enhancement logic improves the perceptual quality of a processed voice. The logic may automatically learn and encode the shape and form of the noise associated with the movement of water and/or the noise associated with water striking a surface in a real or a delayed time. By tracking substantially all or some of the selected attributes, the logic may eliminate, dampen, or reduce the water related noise using a memory that temporarily or permanently stores the attributes of that noise. The voice enhancement logic may also dampen a continuous noise and/or the squeaks, squawks, chirps, clicks, drips, pops, tones, or other sound artifacts that may be generated within some voice enhancement systems and may reconstruct voice when needed.

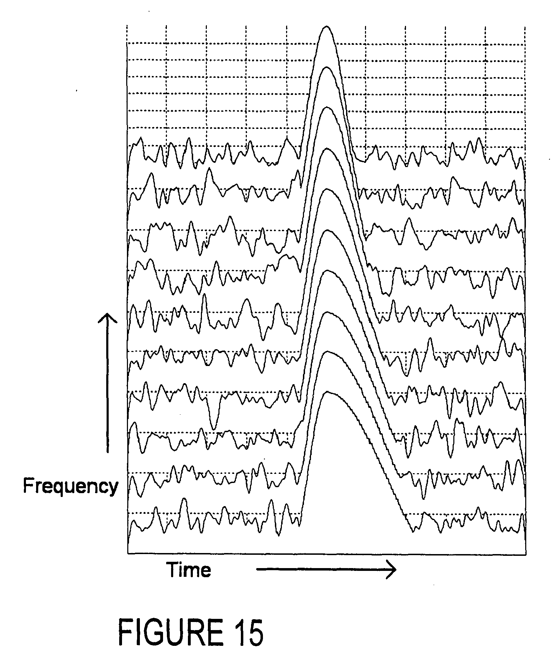

Another alternate method of rain drop detection uses a two-dimensional model of rain drop intensity in both time and frequency. An example of a possible time-frequency model for rain drop detection is shown in Figure 15. Because rain drop noise may be wide-band, substantially similar intensity-vs.-time profiles may be expected in the frequency ranges involved in the raindrop event. All frequencies involved in the rain may plot rise at approximately the same time, but may have different peak values, durations, and decay rates. The rain detector may also consider that part of the rain drop may be masked by louder sounds, such as voice harmonics, and may partially or fully exclude these frequency ranges from the rain model. This exclusion may be explicit, by scanning for probable non-rain features before modeling, or implicit, by choosing a modeling method that allows values to significantly exceed the selected model.

Detection may involve fitting a predefined rain model to the spectrum and determining the quality of the match, as well as possibly identifying which frequency ranges are involved in the rain drop event. The included frequency ranges may be continuous or discontinuous; in addition, all or part of the spectrum may be identified as being only partially involved in the raindrop event.

Some or all of the parameters used to model the rain drop noise may be constrained to be within predetermined and/or adaptive limits, which may be a function of frequency, presence of voice, characteristics of recently detected raindrops, average time between raindrops, or any other internal or external data which can be made available to the rain detector. In particular, these parameters may include rain drop duration, peak intensity, rise and fall rates, allowable intensity variation between different frequency ranges.

Because of the high intensity and short duration of a typical rain drop event, it may be desirable to attenuate or remove the raindrop before the entire event has been observed; furthermore, in a real-time setting there may be limited or no future information available. A further refinement of this rain detection method is a method for estimating the likelihood of a rapid rise being part of a raindrop and estimating the raindrop model parameters without complete future information. In this case, the rate of energy increase, and the range of frequencies involved in the increase, may be used as a primary detection method. The expected duration and rate of decay in the estimated model may be used at a nearby future time to verify that the detected raindrop continues to fit the estimated model. In order to minimize the unwanted attenuation of the speech signal, the rain noise attenuator may discontinue or reduce attenuation if the raindrop does not behave as predicted. Alternatively, when a noise estimate removal method is being used, the rain drop model may simply decay as predicted and allow the signal to pass through unattenuated once the model drops below the level of the rain noise estimate.

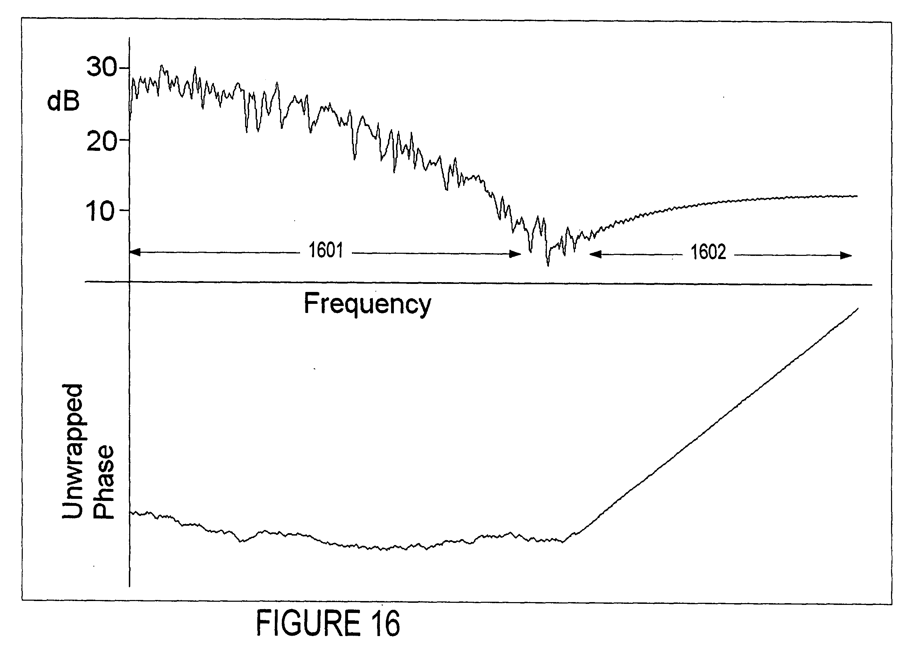

A further refinement uses additional observed properties of raindrop spectra to assist the detector in distinguishing between rain and non-rain signals. One distinguishing feature of the rain drop noise may be the continuity of the magnitude and/or phase of its spectrum across many adjacent frequency bins. In Figure 16, the portion of the spectrum dominated by rain noise 1602 has a significantly smoother magnitude plot than the portion dominated by other noise sources 1601.

Certain types of rain drop noise may have a significantly flatter and/or smoother magnitude than a spectrum containing voice or other speech sounds. One or more mathematical measures of a spectrum's flatness or smoothness may be used, on part or all of the spectrum, to improve the distinction between rain and voice spectra. This measure, which may be computed for the entire spectrum for predefined bands, or continuously using a sliding window across the entire spectrum, may be used to help decide whether a raindrop noise is present and how involved each frequency is in the raindrop.

An example of a smoothness measure is the sum of absolute differences algorithm, which computes the absolute value of the difference in magnitude or logarithmic magnitude between adjacent frequency bins, and summing this over a number of bins to produce a value that is generally small for smooth spectra and greater for spectra with large variations between the intensity of adjacent frequency bins. An example of a flatness measure is the Spectral Flatness Measure (SFM) which may be found by computing the ratio of the geometric mean of the magnitude spectrum to its arithmetic mean.

Phase continuity may also be used to distinguish rain drop noises from other sounds. The rain drop noise may be represented by a short high-energy burst in the time domain, and this may cause the unwrapped phases of the FFT result to be locally linear as illustrated in the phase plot in the portion of the spectrum dominated by rain noise 1602.

One method for determining the local linearity of phases is to take the absolute value of the second derivative of the unwrapped phase, then smoothing this in frequency. This measure may produce values close to zero for regions of the spectrum dominated by impulse-like noise and values significantly greater than zero in regions dominated by other types of sound, such as tonal sound or longer-duration noise. This measure may be used to assist with distinguishing transients such as rain drop noise from tonal or speech sounds.

In addition, the value of the slope in the linear part of the phase plot may be directly relatable to the position of the transient within the time-series signal, allowing a time-based detection or removal method to more precisely detect and/or remove the disturbance in the time domain.

The rain detection module may communicate with other devices in the vehicle to adjust the behavior of the rain detector and remover depending on the status of other systems in the vehicle (e.g. the windshield wiper controller). It may, for example, be desirable to enable the rain detection logic 102 only when the windshield wipers are switched on and/or to adjust the parameters of the rain drop model depending on the speed of the wipers. Conversely, the rain detector may transmit information about the intensity and average time between raindrop-like noises to the wiper controller, which may enhance its ability to intelligently control the wipers without driver intervention.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

**Claims**

1. A system for suppressing rain noise from a voiced or unvoiced signal, comprising:

   a noise detector that detects and models a rain noise from an input signal; and
   a noise attenuator electrically connected to the noise detector to substantially remove the rain noise from the input signal.

2. The system for suppressing rain noise of claim 1 where the noise detector models a portion of the input signal.

3. The system of claim 2 where the noise detector is configured to fit a line to a portion of the input signal.

4. The system of claim 1 where the noise detector is configured to model a rain event by calculating a correlation factor.

5. The system of claim 1 where the noise detector is configured to prevent the attributes of the modeled rain noise from exceeding a predefined value.

6. The system of claim 1 where the noise detector is configured to limit a rain noise correction when a vowel or a harmonic like structure is detected.

7. The system of claim 1 where the noise detector is configured to derive an average rain noise model and the average rain noise model is not updated when a voiced or a mixed voice signal is detected.

8. The system of claim 1 where the noise detector is configured to derive an average rain noise model that is derived by a weighted average of other modeled signals analyzed earlier in time.

9. The system of claim 1 where the noise attenuator is configured to substantially remove the rain noise and a continuous noise from the input signal.

10. The system of claim 1 further comprising a residual attenuator coupled to the noise detector and the noise attenuator to dampen signal power in a frequency range when a large increase in a signal power is detected in the frequency range.

11. The system of claim 1 further including an input device coupled to the noise detector, the input device configured to convert sound waves into analog signals.

12. The system of claim 1 further including a pre-processing system coupled to the noise detector, the pre-processing system configured to pre-condition the input signal before the rain noise detector processes it.

13. The system of claim 12 where the pre-processing system comprises first and second microphones spaced apart and configured to exploit a lag time of a signal that may arrive at the different microphones.

14. The system of claim 13 further comprising control logic that automatically selects a microphone and a channel that senses the least amount of noise in the input signal.

15. The system of claim 13 further comprising a second noise detector coupled to the noise detector and the first microphone.

16. A system for detecting rain noise from a voiced and unvoiced signal, comprising:

    a time frequency transform logic that converts a time varying input signal into the frequency domain;
    a background noise estimator coupled to the time frequency transform logic, the background noise estimator configured to measure the continuous noise that occurs near a receiver; and
    a rain noise detector coupled to the background noise estimator, the rain noise detector configured to automatically identify and model a noise associated with rain.

17. The system of claim 16 further comprising a transient detector configured to disable the background noise estimator when a non-periodic transient signal is detected.

18. The system of claim 16 where the rain noise detector is configured to derive a correlation between a line and a portion of the input signal.

19. The system of claim 16 further comprising a signal discriminator coupled to the rain noise detector, the signal discriminator configured to identify the voice and the noise segments of the input signal.

20. The system of claim 16 further comprising a rain noise attenuator coupled to the rain noise detector, the rain noise attenuator configured to reduce the noise associated with the rain that is sensed by the receiver.

21. The system of claim 16 where the noise attenuator is configured to substantially remove the noise associated with the rain from the input signal.

22. The system of claim 16 further comprising a residual attenuator coupled to the background noise estimator operable to dampen signal power in a frequency range when a large increase in signal power is detected in the frequency range.

23. A system for suppressing rain noise from a voiced or unvoiced signal, comprising:

   a time frequency transform logic that converts a time varying input signal into the frequency domain;
   a background noise estimator coupled to the time frequency transform logic, the background noise estimator configured to measure the continuous noise that occurs near a receiver;
   a rain noise detector means coupled to the background noise estimator, the rain noise detector configured to fit a line to a portion of an input signal; and
   a rain noise attenuator coupled to the rain noise detector means, the rain noise attenuator being configured to remove a noise associated with rain that is sensed by the receiver.

24. A method of removing a noise associated with rain from an input signal comprising:

   converting a time varying signal to a complex spectrum;
   estimating a background noise;
   detecting a noise associated with rain when a high correlation exists between a line and a portion of an input signal; and
   dampening the noise associated with rain from the input signal.

25. The method of claim 24 where the act of estimating the background noise comprises estimating the background noise when a non-periodic transient is not detected.

26. The method of claim 24 where the act of removing the noise associated with rain comprises substantially removing a rain noise from the input signal.

27. A method of removing rain noise from an input signal comprising:

   converting a time varying signal to a complex spectrum;
   estimating a background noise;
   detecting a rain noise when a high correlation exists between a line and a portion of an input signal; and ,
   removing the rain noise from the input signal.

28. A signal-bearing medium having software that controls a detection of a noise associated with water falling through the air comprising:

   a detector that converts sound waves into electrical signals;
   a spectral conversion logic that converts the electrical signals from a first domain to a second domain; and
   a signal analysis logic that models a portion of the sound waves that are associated with a rain.

29. The signal-bearing medium of claim 28 further comprising logic that derives a portion of a voiced signal masked by the noise.

30. The signal-bearing medium of claim 28 further comprising logic that attenuates portion of the sound waves.

**31.** The signal-bearing medium of claim 28 further comprising attenuator logic operable to limit a power in a selected frequency range.

**32.** The signal-bearing medium of claim 28 further comprising noise estimation logic that measures a continuous or ambient noise sensed by the detector.

**33.** The signal-bearing medium of claim 32 further comprising a transient logic that disables the estimation logic when an increase in power is detected.

**34.** The signal-bearing medium of claim 28 where the signal analysis logic is coupled to a vehicle.

**35.** The signal-bearing medium of claim 28 where the signal analysis logic is coupled to an audio system.

**36.** The signal-bearing medium of claim 28 where the signal analysis logic models only the sound waves that are associated with the rain.

FIGURE 1

EP 1 669 983 A1

FIGURE 2

FIGURE 3

FIGURE 4

FIGURE 5

EP 1 669 983 A1

FIGURE 6

FIGURE 7

FIGURE 8

FIGURE 9

EP 1 669 983 A1

FIGURE 10

FIGURE 11

EP 1 669 983 A1

VEHICLE

100 or 800

SPEECH ENHANCEMENT
LOGIC

FIGURE 12

EP 1 669 983 A1

AUDIO SYSTEM &/OR NAVIGATION SYSTEM &/OR

COMMUNICATION SYSTEM — 100 or 800

SPEECH ENHANCEMENT
LOGIC

FIGURE 13

FIGURE 14

FIGURE 15

FIGURE 16

EP 1 669 983 A1

**EP 1 669 983 A1**

**European Patent Office**

**EUROPEAN SEARCH REPORT**

Application Number

EP 05 02 6904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 450 354 A (HARMAN BECKER AUTOMOTIVE SYSTEMS-WAVEMAKERS, INC) 25 August 2004 (2004-08-25) * abstract * * page 5, paragraph [0033]- page 6, paragraph [0038] * * page 7, paragraph [0047] * * figures 3,6 * | 1-36 | INV. G10L21/02 |
| A | EP 1 450 353 A (HARMAN BECKER AUTOMOTIVE SYSTEMS-WAVEMAKERS, INC) 25 August 2004 (2004-08-25) * abstract * * page 4, paragraphs [0032]-[0033] * * page 5, paragraph [0040] * * figures 4,8 * | 1,16,23, 24,27,28 | |

TECHNICAL FIELDS SEARCHED (IPC)

G10L

The present search report has been drawn up for all claims

| Place of search | Date of completion of the search | Examiner |
|---|---|---|
| Munich | 10 April 2006 | Greiser, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

**ANNEX TO THE EUROPEAN SEARCH REPORT
ON EUROPEAN PATENT APPLICATION NO.**

EP 05 02 6904

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2006

| Patent document cited in search report | | Publication date | Patent family member(s) | | Publication date |
|---|---|---|---|---|---|
| EP 1450354 | A | 25-08-2004 | CA | 2458427 A1 | 21-08-2004 |
| | | | CN | 1530928 A | 22-09-2004 |
| | | | JP | 2004254329 A | 09-09-2004 |
| | | | US | 2004165736 A1 | 26-08-2004 |
| | | | US | 2004167777 A1 | 26-08-2004 |
| EP 1450353 | A | 25-08-2004 | CA | 2458428 A1 | 21-08-2004 |
| | | | CN | 1530929 A | 22-09-2004 |
| | | | JP | 2004254322 A | 09-09-2004 |
| | | | US | 2005114128 A1 | 26-05-2005 |

EPO FORM P0459

For more details about this annex : see Official Journal of the European Patent Office, No. 12/82